(19) Europäisches Patentamt
European Patent Office
Office européen des brevets

(11) **EP 4 756 914 A1**

(12) **EUROPEAN PATENT APPLICATION**
published in accordance with Art. 153(4) EPC

(43) Date of publication:
**10.06.2026 Bulletin 2026/24**

(21) Application number: **24849067.4**

(22) Date of filing: **25.07.2024**

(51) International Patent Classification (IPC):
**H01M 4/38** (2006.01)    **H01M 4/36** (2006.01)
**H01M 4/58** (2010.01)

(52) Cooperative Patent Classification (CPC):
**H01M 4/36; H01M 4/38; H01M 4/58;** Y02E 60/10

(86) International application number:
**PCT/JP2024/026717**

(87) International publication number:
**WO 2025/028413 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.08.2023 JP 2023126504**

(71) Applicant: **Panasonic Intellectual Property
Management Co., Ltd.
Kadoma-shi, Osaka 571-0057 (JP)**

(72) Inventors:
• **JIN, Takuya**
  **Kadoma-shi, Osaka 571-0057 (JP)**
• **SAKATA, Motohiro**
  **Kadoma-shi, Osaka 571-0057 (JP)**
• **SATO, Yosuke**
  **Kadoma-shi, Osaka 571-0057 (JP)**

(74) Representative: **Novagraaf International SA
Chemin de l'Echo 3
1213 Onex, Geneva (CH)**

(54) **NEGATIVE-ELECTRODE ACTIVE MATERIAL AND BATTERY**

(57)    A negative electrode active material of the present disclosure includes composite particles 10 each including a base particle 11. The base particle 11 includes an alkali aluminate phase 12 including at least one alkali metal element and Al, and a silicon phase 13 dispersed in the alkali aluminate phase 12. The total pore volume of pores 14 having a diameter of 10 nm or more and 200 nm or less in the composite particles 10, as calculated by the BJH method, is 0.05 cm$^3$/g or less.

FIG.1

## Description

TECHNICAL FIELD

The present disclosure relates to a negative electrode active material and a battery.

BACKGROUND ART

In recent years, secondary batteries such as lithium-ion batteries have been widely used for use requiring a high capacity, such as on-board use and power storage use. A negative electrode active material, which is a main constituent of a negative electrode, is one of important factors for attempting to increase the capacity of the battery, and therefore various investigations have been made on the negative electrode active material. Among these, use of a material containing silicon (Si-containing material) has attracted attention as a negative electrode active material having a high theoretical capacity density.

PATENT LITERATURE 1 discloses a negative electrode active material including composite particles each including a lithium aluminate phase and a silicon phase dispersed in the lithium aluminate phase. Since the negative electrode active material disclosed in PATENT LITERATURE 1 includes composite particles (hereinafter sometimes referred to as "LAX particles") in each of which a silicon phase is dispersed in a lithium aluminate phase having excellent alkali resistance, the negative electrode active material can reduce side reactions during initial charge/discharge of a lithium-ion secondary battery and suppress a decrease in the initial charge-discharge efficiency of the battery.

CITATION LIST

Patent Literature

PATENT LITERATURE 1: WO 2022/113500 A1

SUMMARY OF INVENTION

Technical Problem

As described above, a negative electrode active material including LAX particles can suppress a decrease in the charge-discharge efficiency of a battery.

However, the negative electrode active material including LAX particles has a problem with durability against charge and discharge and is required to improve the cycle characteristics of a battery.

The present disclosure provides a negative electrode active material that can improve the cycle characteristics of a battery.

Solution to Problem

A negative electrode active material of the present disclosure includes composite particles each including a base particle, wherein

the base particle includes

an alkali aluminate phase including at least one alkali metal element and Al, and
a silicon phase dispersed in the alkali aluminate phase, and

a total pore volume of pores having a diameter of 10 nm or more and 200 nm or less in the composite particles, as calculated by a BJH method, is 0.05 cm$^3$/g or less.

Advantageous Effects of Invention

According to the technology of the present disclosure, it is possible to provide a negative electrode active material that can improve the cycle characteristics of a battery.

BRIEF DESCRIPTION OF THE DRAWINGS

FIG. 1 is a cross-sectional view showing a schematic configuration of an example of composite particles included in a negative electrode active material according to an embodiment.
FIG. 2 is a cross-sectional view showing a schematic configuration of a first modification of the composite particles included in the negative electrode active material according to the embodiment.
FIG. 3 is a cross-sectional view showing a schematic configuration of a second modification of the composite particles included in the negative electrode active material according to the embodiment.
FIG. 4 is a cross-sectional view showing a schematic configuration of an example of a battery according to the embodiment.
FIG. 5 is a cross-sectional view showing a schematic configuration of another example of the battery according to the embodiment.

DESCRIPTION OF EMBODIMENTS

[Findings on Which Present Disclosure Is Based]

A negative electrode active material including composite particles, such as LAX particles, each including an alkali aluminate phase including at least one alkali metal element and Al, such as a lithium aluminate phase, and a silicon phase dispersed in the alkali aluminate phase, can reduce side reactions during initial charge/discharge of a battery and suppress a decrease in the initial charge-discharge efficiency of the battery. The alkali aluminate phase has excellent alkali resistance. The negative electrode active material including such composite particles in which a silicon phase is dispersed in an alkali aluminate phase can reduce side reactions during initial charge of a battery to achieve high initial efficiency of the battery.
However, the negative electrode active material including the composite particles each including an alkali aluminate phase does not have sufficient durability against charge and discharge, and there is room for improvement in cycle characteristics. The present inventors have studied the reason for this and have found that, since the alkali aluminate phase has a high melting point and softening point, when the alkali aluminate phase is to be produced by a sintering process, many pores are likely to form inside the alkali aluminate phase, and the presence of these pores makes a particle structure likely to collapse due to expansion and contraction caused by charge and discharge. The present inventors have conducted thorough studies focusing on the pores present inside the composite particles, and have found that the cycle characteristics of a battery can be effectively improved by reducing pores having a specific size, thereby coming to conceive of the negative electrode active material of the present disclosure described below.

[Embodiment of Present Disclosure]

Hereinafter, an embodiment of the present disclosure will be described in detail with reference to the drawings. The present disclosure is not limited to the following embodiment.

(Negative Electrode Active Material)

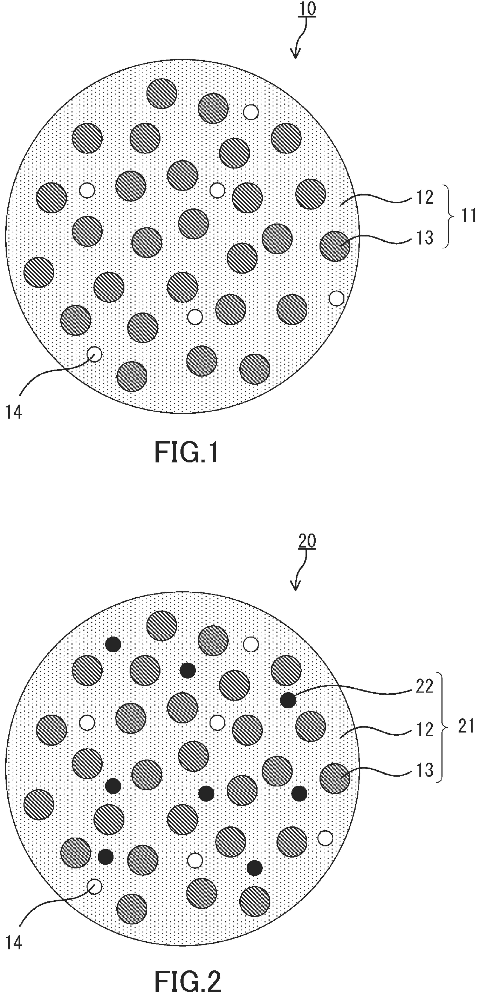

A negative electrode active material according to the present embodiment includes composite particles each including a base particle. FIG. 1 is a cross-sectional view showing a schematic configuration of an example of the composite particles included in the negative electrode active material according to the present embodiment.
A composite particle 10 included in the negative electrode active material according to the present embodiment includes a base particle 11. The base particle 11 includes an alkali aluminate phase 12 and a silicon phase 13 dispersed in the alkali aluminate phase 12. In the composite particles 10, pores 14 may be present in the base particles 11, but the total pore volume of pores having a diameter of 10 nm or more and 200 nm or less in the composite particles 10, as calculated by the BJH (Barrett-Joyner-Halenda) method, is 0.05 cm$^3$/g or less.
In the negative electrode active material according to the present embodiment, in the composite particles 10, pores having a diameter of 10 nm or more and 200 nm or less are reduced such that the total pore volume of the pores is 0.05 cm$^3$/g or less. Owing to this configuration, collapse (for example, occurrence of cracks, fractures, etc.) of the particle structure of the base particle 11 caused by expansion and contraction of the negative electrode active material accompanying charge and discharge of a battery is suppressed. Accordingly, the negative electrode active material according to the present embodiment can improve durability against charge and discharge, and, as a result, can improve the cycle characteristics of the battery.

The alkali aluminate phase 12 has excellent alkali resistance. Therefore, the negative electrode active material including the composite particle 10 suppresses side reactions with alkali metal ions such as Li ions during initial charge, and deterioration of the negative electrode active material due to the side reactions and a decrease in initial capacity due to the deterioration are suppressed. That is, the negative electrode active material according to the present embodiment not only can improve the cycle characteristics of the battery as described above, but also can suppress a decrease in initial charge-discharge efficiency.

Here, in this description, the "base particle" means a particulate structure made of a material in which the silicon phase 13 is dispersed in a matrix of the alkali aluminate phase 12. Therefore, for example, a coating layer such as a conductive layer provided on the surface of the base particle, as will be described later, is not included in the base particle. In addition, the composite particle 10 may be composed of only the base particle 11.

In this description, the "total pore volume of pores having a diameter of 10 nm or more and 200 nm or less in the composite particles 10" means the total volume of pores having a diameter of 10 nm or more and 200 nm or less among the pores included in the composite particles 10. The total pore volume of the pores having a diameter of 10 nm or more and 200 nm or less in the composite particles 10 is obtained by converting a result of gas adsorption/desorption measurement using the BJH method.

In the negative electrode active material according to the present embodiment, the total pore volume of the pores having a diameter of 10 nm or more and 200 nm or less in the composite particles 10 may be 0.04 $cm^3/g$ or less. When the pores having a diameter of 10 nm or more and 200 nm or less in the base particles 11 are reduced to 0.04 $cm^3/g$ or less, the negative electrode active material according to the present embodiment can further improve the cycle characteristics of the battery.

The lower limit value of the total pore volume of the pores having a diameter of 10 nm or more and 200 nm or less in the composite particles 10 is not particularly limited, but is desirably 0.001 $cm^3/g$, and is 0.003 $cm^3/g$ as an example.

In the negative electrode active material according to the present embodiment, the base particle 11 may further include other elements in addition to the alkali aluminate phase 12 and the silicon phase 13. For example, the base particle 11 may further include a carbon phase dispersed in the alkali aluminate phase 12.

FIG. 2 is a cross-sectional view showing a schematic configuration of a first modification of the composite particles included in the negative electrode active material according to the present embodiment. As shown in FIG. 2, a base particle 21 included in a composite particle 20 of the first modification further includes a carbon phase 22 dispersed in the alkali aluminate phase 12. Since the carbon phase 22 is dispersed in the alkali aluminate phase 12, the negative electrode active material according to the present embodiment can further improve durability against charge and discharge, and as a result, can further improve the cycle characteristics of the battery.

In the composite particles 20 each including the base particle 21 including the carbon phase 22, the range of the total pore volume of pores having a diameter of 10 nm or more and 200 nm or less is 0.05 $cm^3/g$ or less, as in the composite particles 10.

In the negative electrode active material according to the present embodiment, the composite particles may each further include a conductive layer coating at least a part of the surface of the base particle. In other words, the negative electrode active material according to the present embodiment may include composite particles each including a base particle and a conductive layer coating at least a part of the surface of the base particle. The base particle coated with the conductive layer may be the base particle 11 shown in FIG. 1 or the base particle 21 shown in FIG. 2.

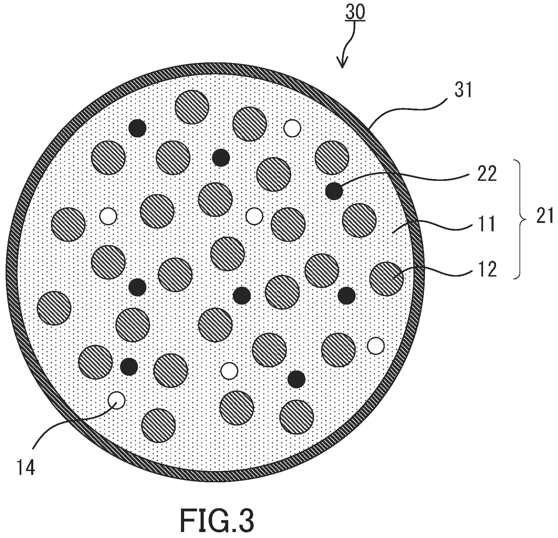

FIG. 3 is a cross-sectional view showing a schematic configuration of a second modification of the composite particles included in the negative electrode active material according to the present embodiment. FIG. 3 shows a composite particle 30 including the base particle 21 shown in FIG. 2 and a conductive layer 31 coating at least a part of the surface of the base particle 21. The negative electrode active material including the composite particle 30 in which at least a part of the surface of the base particle 21 is coated with the conductive layer 31 as shown in FIG. 3 can improve conductivity. The conductive layer 31 is, for example, a thin film layer including a conductive material. The conductive material may be a conductive carbon material. That is, the conductive layer 31 may include carbon. In the composite particle 30 of the second modification, the base particle 21 may be the base particle 11 shown in FIG. 1. The conductive layer 31 includes, for example, carbon.

When each composite particle includes carbon, the content rate of carbon in the composite particle is, for example, 2 mass% or more and 15 mass% or less. Owing to this configuration, the negative electrode active material according to the present embodiment can further improve durability against charge and discharge, and, as a result, can further improve the cycle characteristics of the battery. Examples of the carbon included in the composite particle include carbon in the carbon phase 22 in the composite particle 20 of the first modification and the composite particle 30 of the second modification and carbon in the carbon material included in the conductive layer 31 in the composite particle 30 of the second modification.

The content rate of carbon in the composite particle may be 3.5 mass% or more and 12 mass% or less. Owing to this configuration, the negative electrode active material according to the present embodiment can even further improve durability against charge and discharge, and, as a result, can even further improve the cycle characteristics of the battery.

Each component of the negative electrode active material of the present embodiment will be specifically described below.

[Base Particle]

The following description of the base particle can be applied to both the base particle 11 shown in FIG. 1 and the base particle 21 shown in FIG. 2.

The base particle has, for example, a sea-island structure in which a plurality of fine silicon phases 13 (i.e., island parts) are dispersed in a matrix of the alkali aluminate phase 12 (i.e., sea part) as shown in FIG. 1. The alkali aluminate phase 12 has excellent ionic conductivity. Therefore, owing to this configuration, the silicon phase 13 smoothly occludes and releases alkali metal ions through the alkali aluminate phase 12. In addition, owing to this configuration, the stress caused by expansion and contraction of the silicon phase 13 during charge and discharge is alleviated by the alkali aluminate phase 12, thereby suppressing cracks and fractures of the base particle. Therefore, both a higher capacity and improved cycle characteristics by containing silicon can be achieved.

The base particle may be included in the negative electrode active material in the form of a primary particle or may be included in the negative electrode active material in the form of a secondary particle formed by bonding a plurality of primary particles. The average particle diameter of the secondary particle as the base particle is, for example, 1 $\mu$m or more and 25 $\mu$m or less, and may be 4 $\mu$m or more and 15 $\mu$m or less. In this case, the stress caused by change in the volume of the base particle due to charge and discharge is easily alleviated, and therefore the negative electrode active material according to the present embodiment easily achieves good cycle characteristics of the battery. The surface area of the base particle also becomes appropriate, and a decrease in capacity due to side reactions with a non-aqueous electrolyte is also suppressed.

The average particle diameter of the base particle means a particle diameter at which a volumetric integrated value is 50% in a particle size distribution measured by a laser diffraction scattering method (volume-average particle diameter). For the measurement apparatus, "LA-750", manufactured by HORIBA, Ltd., may be used, for example. When the surface of the base particle is coated with the conductive layer 31, that is, in the composite particle 30, the thickness of the conductive layer 31 is small so as not to substantially affect the average particle diameter of the base particle. Therefore, the average particle diameter of the composite particle 30 may be regarded as the average particle diameter of the base particle.

The base particle can be taken out of the battery by the following method. The following method is an example.

First, the battery in a fully discharged state is disassembled to take out a negative electrode, and the negative electrode is washed with, for example, anhydrous ethyl methyl carbonate or dimethyl carbonate to remove the non-aqueous electrolyte component. A negative electrode mixture layer is peeled from a current collector (for example, copper foil) that is a negative electrode core, and the mixture layer is crushed with a mortar to obtain a sample powder. Next, the sample powder is dried in a dry atmosphere for about 1 hour and immersed in, for example, gently boiled 6-M hydrochloric acid for about 10 minutes to remove elements derived from components other than the base particle. Next, the sample powder is washed with ion-exchanged water, filtered, and dried at 200°C for 1 hour, for example. The fully discharged state is a state where a depth of discharge (DOD) is 90% or more (the state of charge (SOC) is 10% or less).

The alkali aluminate phase 12 includes at least one alkali metal element, aluminum (Al), and oxygen (O). The alkali aluminate phase 12 is a phase including an alkali aluminate which is a composite oxide including at least one alkali metal element and Al.

The alkali aluminate phase 12 has good ionic conductivity, and ions such as Li ions are smoothly occluded and released by the silicon phase 13 through the alkali aluminate phase 12.

When the alkali metal element included in the alkali aluminate phase 12 is Li, the alkali aluminate phase 12 includes a lithium aluminate. The composition of the lithium aluminate can be represented by the formula: $Li_uAlO_{(3+u)/2}$. From the viewpoint of ease of production, stability, ionic conductivity, and the like, "u" in the formula is, for example, greater than 0 and 5 or less, and may be greater than 0 and 1 or less. In the case of u = 1/5, the composition can be represented by $LiAl_5O_8$, and in the case of u = 1/2, the composition can be represented by $Li_2Al_4O_7$. In the case of u = 1, the composition can be represented by $LiAlO_2$, and in the case of u = 5, the composition can be represented by $Li_5AlO_4$.

When the alkali aluminate phase 12 includes a lithium aluminate, the alkali aluminate phase 12 may include at least one selected from the group consisting of $LiAl_5O_8$, $Li_2Al_4O_7$, $LiAlO_2$, and $Li_5AlO_4$, for example, and may include $LiAlO_2$ as a main component. Here, the "main component" means a component accounting for 50 mass% or more of the total mass of the alkali aluminate phase 12. The content rate of $LiAlO_2$ may be 70 mass% or more.

The alkali aluminate phase 12 has better alkali resistance than a lithium silicate phase. Therefore, with the negative electrode active material of the present embodiment, compared to a negative electrode active material using a lithium silicate phase, for example, side reactions with Li ions during initial charge are suppressed, and deterioration of the negative electrode active material due to the side reactions is suppressed.

An atomic ratio (O/Al) of O to Al in the alkali aluminate is, for example, 1.6 or more and 4 or less. In addition, an atomic ratio (MA/Al) of alkali metal (MA) to Al in the alkali aluminate is, for example, 1/5 or more and 5 or less. When these atomic ratios are within the above ranges, the stability and ionic conductivity of the alkali aluminate phase 12 become better. In this description, the stability of the alkali aluminate phase 12 includes both the chemical stability (alkali resistance) and the thermal stability of the alkali aluminate phase 12.

The alkali metal element is an element that belongs to Group 1 of the periodic table. That is, the alkali aluminate phase 12 contains at least one element selected from the group consisting of Li, Na, K, Rb, Cs, and Fr.

The alkali metal element may include at least one selected from the group consisting of Li, Na, and K. The alkali metal element may include at least one selected from the group consisting of Li and Na, and may include Li.

The alkali aluminate phase 12 may include two types of alkali metal elements. The alkali aluminate phase 12 may include at least two selected from the group consisting of Li, Na, and K, or may include Li and Na.

The alkali aluminate phase 12 may further contain an element M in addition to the alkali metal element, Al, and O.

An example of the element M is at least one selected from the group consisting of calcium (Ca), magnesium (Mg), zirconium (Zr), iron (Fe), boron (B), phosphorus (P), and lanthanum (La). When the alkali aluminate phase 12 includes the element exemplified above as the element M, for example, the stability and ionic conductivity of the alkali aluminate phase 12 are further improved. In addition, side reactions due to contact between the alkali aluminate phase 31 and the electrolyte are suppressed. Among these, the element M desirably includes at least one selected from the group consisting of Zr, Fe, P, and B.

The element M may be B. That is, the alkali aluminate phase 12 may further include B. By adding B, the pores included in the base particle 21 can be reduced. Therefore, it becomes easy to set the total pore volume of pores having a diameter of 10 nm or more and 200 nm or less in the base particle 21 to 0.05 cm$^3$/g or less and desirably 0.04 cm$^3$/g or less.

The element M may form a compound. The compound may be, for example, an oxide of the element M or an aluminate of the element M, depending on the type of the element M. In the alkali aluminate phase 12, the content of the element M is, for example, 0.3 mol% or more and 3 mol% or less with respect to the total amount of elements other than oxygen.

The alkali aluminate phase 12 may further include trace amounts of elements such as chromium (Cr), nickel (Ni), manganese (Mn), copper (Cu), and molybdenum (Mo).

The alkali aluminate phase 12 may be amorphous. In this case, the influence of expansion and contraction of the silicon phase 13 can be more effectively alleviated.

In the alkali aluminate phase 12, a fine $Al_2O_3$ phase having high crystallinity may be dispersed. The $Al_2O_3$ phase is distributed in the form of islands in the matrix of the alkali aluminate phase 12. In this case, expansion and cracks of the alkali aluminate phase 12 due to expansion and contraction of the silicon phase 13 are easily suppressed, and the effect of improving cycle characteristics is enhanced. When an $Al_2O_3$ phase is present, a peak derived from the $Al_2O_3$ phase can be observed around $2\theta = 25.4°$ in an X-ray diffraction pattern of the base particle obtained by X-ray diffraction measurement. The content of $Al_2O_3$ in the base particle is 10 mass% or less.

The silicon phase 13 is a phase of elemental Si, and repeatedly occludes and releases Li ions as the battery is charged and discharged. A capacity is exhibited by a Faraday reaction involving the silicon phase 13. The silicon phase 13 has a large capacity. Furthermore, the silicon phase 13 undergoes a large degree of expansion and contraction during charge and discharge. In the negative electrode active material of the present disclosure, since the silicon phase 13 is dispersed in the alkali aluminate phase 12, the stress caused by expansion and contraction of the silicon phase 13 is alleviated by the alkali aluminate phase 12.

The silicon phase 13 may include crystalline silicon. The silicon phase 13 is composed of, for example, a plurality of crystallites. The crystallite size of the silicon phase 13 may be 30 nm or less, 20 nm or less, or 15 nm or less. As a result, change in volume due to expansion and contraction of the silicon phase 13 during charge and discharge can be reduced, and the effect of improving cycle characteristics becomes more remarkable. The crystallite size of the silicon phase 13 is calculated using the Scherrer equation from the full width at half maximum of a diffraction peak derived from the Si(111) plane in an X-ray diffraction pattern obtained by X-ray diffraction measurement using Cu-Kα rays.

The lower limit value of the crystallite size of the silicon phase 13 is not particularly limited, but is, for example, 1 nm. An example of a suitable crystallite size of the silicon phase 13 is 1 nm or more and 15 nm or less and may be 5 nm or more and 11 nm or less. When the crystallite size of the silicon phase 13 is 1 nm or more, for example, the surface area of the silicon phase 13 can be reduced to be small, and therefore deterioration of the silicon phase 13 which is accompanied by the generation of irreversible capacity is less likely to occur. When the crystallite size is 15 nm or less, the expansion and contraction of the silicon phase 13 are easily made uniform, and the stress generated in the base particle is effectively alleviated.

The silicon phase 13 may be in the form of particles. The silicon phase 13 is, for example, in the form of particles at least before the first charge. The average particle diameter of the silicon phase 13 may be 1 nm or more and 1000 nm or less. The average particle diameter of the silicon phase 13 may be 500 nm or less, 200 nm or less, or 50 nm or less. After the first charge, the average particle diameter of the silicon phase 13 may be 400 nm or less, or 100 nm or less. By dispersing the fine silicon phase 13 in the alkali aluminate phase 12 as described above, the change in the volume of the base particle during charge and discharge is reduced, and the structural stability of the base particle is further improved.

The average particle diameter of the silicon phase 13 can be measured using a scanning electron microscope (SEM) image obtained by observing the base particle in which a cross-section of the silicon phase 13 is exposed, with an SEM. Specifically, the average particle diameter of the silicon phase 13 is determined by averaging the maximum diameters of 100 silicon phases 13 arbitrarily selected from the cross-sectional SEM image of the base particle.

From the viewpoint of increasing capacity, the content rate of the silicon phase 13 in the base particle may be 30 mass% or more, 35 mass% or more, or 55 mass% or more. From the viewpoint of improving cycle characteristics, the content rate of the silicon phase 13 in the base particle may be 95 mass% or less, 75 mass% or less, or 70 mass% or less. In this case, the silicon phase 13 exposed on the surface of the base particle without being coated with the alkali aluminate phase 12 is reduced, and side reactions between the electrolyte and the silicon phase 13 are also suppressed. The content rate of the silicon phase 13 in the base particle may be 30 mass% or more and 90 mass% or less, or 35 mass% or more and 75 mass% or less.

The content rate of the silicon phase 13 in the base particle is determined by quantifying the amount of Si constituting the silicon phase 13 in the base particle, using Si-NMR, as will be described later.

When the base particle includes the carbon phase 22, that is, when the base particle is the base particle 21 shown in FIG. 2, the carbon phase 22 is a phase of a carbon material. Examples of the carbon material include graphites such as natural graphite, artificial graphite, and graphitized mesophase carbon, amorphous carbon, soft carbon, and hard carbon. The carbon material may be amorphous carbon. Examples of the amorphous carbon include carbon black, calcined pitch, cokes, and activated carbon.

The form of the carbon phase 22 may be the form of particles. The shape of the particles is not particularly limited, and examples thereof include spherical, angular, platelike, and linear shapes.

The size of the carbon phase 22 is not particularly limited. When the carbon phase 22 is in the form of particles, the average particle diameter of the carbon phase 22 may be, for example, 1 nm or more and 1000 nm or less, 10 nm or more and 500 nm or less, or 10 nm or more and 200 nm or less.

The average particle diameter of the carbon phase 22 can be measured using an SEM image obtained by observing the base particle in which a cross-section of the carbon phase 22 is exposed, with an SEM. Specifically, the average particle diameter of the carbon phase 22 is determined by averaging the maximum diameters of 100 carbon phases 22 arbitrarily selected from the cross-sectional SEM image of the base particle.

The base particle may be substantially free of lithium silicate and $SiO_2$. The total content of lithium silicate and $SiO_2$ in the base particle may be, for example, 3 mass% or less.

In the base particle, the ratio (mAl) of the mass of Al element to the total mass of elements excluding oxygen element and carbon element may be 10 mass% or more and 47 mass% or less, or 11.5 mass% or more and 45.5 mass% or less. The ratio (mMA) of the mass of the alkali metal element to the total mass of the elements excluding oxygen element and carbon element may be 0.7 mass% or more and 13.5 mass% or less, 1.0 mass% or more and 9.5 mass% or less, or 1.5 mass% or more and 3.5 mass% or less. When the ratio (mAl) of the mass of Al and the ratio (mMA) of the mass of the alkali metal element are within the above ranges, an aluminate phase having excellent stability and ionic conductivity is likely to be obtained.

With the above configuration, the stability and ionic conductivity of the alkali aluminate phase 12 can be improved. The above stability includes both chemical stability (alkali resistance) and thermal stability.

In the base particle, the (mMA/mAl) of the ratio (mMA) of the mass of the alkali metal element to the total mass of the elements excluding oxygen element and carbon element, to the ratio (mAl) of the mass of Al element to this total mass, may be 0.04 or more and 0.50 or less, or 0.05 or more and 0.25 or less, from the viewpoint of the stability, the ionic conductivity, and the reduction of pores (particularly, reduction of pores having a diameter of 10 nm or more and 200 nm or less) of the alkali aluminate phase 12, etc.

In the base particle, the ratio (mSi) of the mass of silicon (Si) to the total mass of the elements excluding oxygen element and carbon element may be 40 mass% or more and 90 mass% or less, or 50.8 mass% or more and 85.5 mass% or less. With the above configuration, the battery can easily achieve both high capacity and good cycle characteristics. The ratio (mSi) of the mass of Si is the amount of Si constituting the silicon phase 13 in the base particle.

When the alkali aluminate phase 12 further includes B, the ratio (mB) of the mass of B to the total mass of the elements excluding oxygen element and carbon element in the base particle may be 1 mass% or more and 20 mass% or less, or 2 mass% or more and 15 mass% or less. With the above configuration, the effect of improving cycle characteristics can become more remarkable.

The ratio (mAl/mB) of the ratio (mAl) of the mass of Al to the ratio (mB) of the mass of B may be 1.0 or more and 30.0 or less, 1.0 or more and 20.0 or less, or 1.0 or more and 10.0 or less. When mAl/mB is 30.0 or less, the effect of reducing pores in the base particle can become more remarkable. Accordingly, deterioration of the particle structure caused by the pores in the base particle is suppressed, and thus the cycle characteristics of the battery can be effectively improved. When mAl/mB is 1.0 or more, a decrease in initial charge-discharge efficiency can be reduced. Therefore, when mAl/mB is within the above range, both improved cycle characteristics and good initial charge-discharge efficiency can be achieved.

In the composite particles each including the base particle, as described above, the total pore volume of the pores having a diameter of 10 nm or more and 200 nm or less, as calculated by the BJH method, is 0.05 cm$^3$/g or less and may be 0.04 cm$^3$/g or less.

The total pore volume can be controlled by adding the element M (e.g., B) to the alkali aluminate phase 12 described above, and adjusting the calcining temperature in a production process of the base particle, the compressive force applied to particles during calcination, mMA/mAl, etc. It is also possible to control the total pore volume to 0.05 cm$^3$/g or less by filling the pores formed inside the base particle with another material (hereinafter referred to as filling material) when producing the base particle. Examples of the filling material with which the pores are filled include carbon materials and resin materials. When, for example, a carbon material is used as the filling material, the carbon material with which the pores are filled can form the carbon phase 22 shown in FIG. 2. When filling the pores formed inside the base particle with, for example, a carbon material, the pores of the base particle may be filled with the carbon material, for example, by mixing the base particle including the pores with an amount of the carbon material selected in consideration of the size and volume of the pores included in the base particle, and performing heat treatment on the mixture. By adjusting the carbon material to be used, the heat treatment conditions, etc., the total pore volume can be controlled to 0.05 cm$^3$/g or less.

The base particle may have a Vickers hardness of 300 HV or more. When the base particle has a high Vickers hardness, change in the volume of the silicon phase 13 during charge and discharge is easily suppressed, and thus deterioration of the particle structure can be reduced. As a result, the effect of improving cycle characteristics becomes more remarkable. The Vickers hardness of the base particle is more desirably 350 HV or more and may be 400 HV or more, or 500 HV or more.

The Vickers hardness of the base particle can be measured using a Vickers hardness tester. Specifically, the base particle is embedded into a thermosetting resin, and polished with sandpaper No. 400 to expose a cross-section of the base particle. The cross-section is further mirror-finished by polishing with sandpaper No. 2000 and buffing. The Vickers hardness is measured under the conditions of a load of 1 kg and a holding time of 15 seconds. The upper limit value of the Vickers hardness of the base particle is not particularly limited, but is, for example, 1500 HV.

The content of each element in the base particle is measured by the following method. The oxygen content can be measured using an oxygen/nitrogen/hydrogen analyzer. The Si content can be measured using NMR. The carbon content can be measured using a carbon/sulfur analyzer. The contents of other elements can be measured by inductively coupled plasma atomic emission spectrometry (ICP). If such a content cannot be measured by ICP, the measurement can also be performed using energy dispersive X-ray (EDX). If such a content cannot be measured by any of ICP and EDX, the measurement can also be performed using Auger electron spectrometry (AES). The composition of the alkali aluminate phase 12 can be determined from the content of each element. When measurement is performed from the state of a battery, for example, the battery in a fully discharged state is disassembled to take out a negative electrode, the negative electrode is washed with, for example, anhydrous ethyl methyl carbonate or dimethyl carbonate to remove the non-aqueous electrolyte component, and is dried, and then a cross-section of a negative electrode mixture layer obtained using a cross-section polisher is analyzed, whereby the measurement can be performed. In addition, if it is necessary to take out the base particle from the battery as a measurement sample, the base particle can be taken out from the battery by, for example, taking out the negative electrode mixture layer from the negative electrode taken out from the battery, crushing the negative electrode mixture layer, and removing elements derived from components other than the base particle, as described above. The composite particle may be taken out from the battery in a state of a composite particle in which the conductive layer is provided on the surface of the base particle, and each element of the base particle may be determined based on the analysis results of each element in the composite particle, or the conductive layer may be removed using an appropriate means, depending on the constituent material of the conductive layer, etc., and the internal base particle portion may be analyzed.

<Inductively Coupled Plasma Atomic Emission Spectrometry (ICP)>

A sample of the base particle is completely dissolved in a heated acid solution (mixed acid of hydrofluoric acid, nitric acid, and sulfuric acid), and carbon residue in the solution is removed by filtration. Then, the obtained filtrate is analyzed by ICP to measure the spectral intensity of each element. Next, a calibration curve is prepared using commercially available standard solutions of the elements, and the content of each element included in the base particle is calculated.

<Energy Dispersive X-ray (EDX)>

From a backscattered electron image of a cross-section of the negative electrode active material in which a cross-section of the base particle is exposed, elemental mapping analysis is performed by EDX. Content areas of the target elements are calculated using image analysis software. The observation magnification is, for example, 2000 to 20000 times. When measurement is performed from the state of a battery, 10 base particles having a maximum particle diameter of 5 $\mu$m or more are randomly selected from a cross-sectional image of a backscattered electron image of the negative electrode mixture layer including the negative electrode active material, and elemental mapping analysis is performed on each of the base particles by EDX. The measured values of the content area of a predetermined element included in the 10 particles are averaged to calculate the content of the target element.

Desired measurement conditions of the cross-sectional SEM-EDX analysis are described below.

Processing apparatus: SM-09010 (Cross Section Polisher), manufactured by JEOL Ltd.
Processing condition: acceleration voltage 6 kV
Current value: 140 $\mu$A
Vacuum degree: $1 \times 10^{-3}$ Pa to $2 \times 10^{-3}$ Pa
Measurement apparatus: electron microscope SU-70, manufactured by Hitachi, Ltd.
Acceleration voltage during analysis: 10 kV
Field: free mode
Probe current mode: Medium
Probe current range: High
Anode Ap.: 3
OBJ Ap.: 2
Analysis area: 1-$\mu$m square
Analysis software: EDAX Genesis
CPS: 20500
Lsec: 50
Time constant: 3.2

<Auger Electron Spectrometry (AES)>

From a backscattered electron image of a cross-section of the negative electrode active material in which a cross-section of the base particle is exposed, qualitative and quantitative analysis of elements is performed using an AES analyzer (for example, JAMP-9510F, manufactured by JEOL Ltd.). The measurement conditions may be, for example, an acceleration voltage of 10 kV, a beam current of 10 nA, and an analysis region of 20 $\mu$m$\phi$. When measurement is performed from the state of a battery, 10 base particles having a maximum particle diameter of 5 $\mu$m or more are randomly selected from a cross-sectional image of a backscattered electron image of the negative electrode mixture layer including the negative electrode active material, and qualitative and quantitative elemental analysis is performed on each of the base particles using the AES analyzer. The contents of a predetermined element included in 10 particles are averaged to calculate the content.

In the process of charge/discharge, a coating can be formed on the surface of the base particle due to decomposition of the non-aqueous electrolyte, etc. As described above, a conductive layer may be provided on the surface of the base particle. Therefore, the EDX analysis and AES analysis are performed on a range, for example, 1 $\mu$m inward from the peripheral edge of the cross-section of each particle such that the thin coating and conductive layer are not included in the measurement range.

<Inert Gas Fusion - Non-Dispersive Infrared Absorption Method>

The content of oxygen included in the base particle can be measured using an oxygen/nitrogen/hydrogen analyzer (for example, EGMA-830 model, manufactured by HORIBA, Ltd.). The sample is placed in a Ni capsule, the Ni capsule is then placed in a carbon crucible heated with an electric power of 5.75 kW together with Sn pellets and Ni pellets that serve as a flux, and released carbon monoxide gas is detected. A calibration curve is prepared using a standard sample of $Y_2O_3$, and the oxygen content of the sample is calculated.

<Nuclear Magnetic Resonance Spectroscopy (NMR)>

The amount of Si constituting the silicon phase 13 in the base particle can be quantified using Si-NMR. Desired measurement conditions of the Si-NMR are described below.

Measurement apparatus: solid nuclear magnetic resonance spectrum measurement apparatus (INOVA-400), manufactured by VARIAN, Inc.
Probe: Varian 7 mm CPMAS-2
MAS: 4.2 kHz

MAS speed: 4 kHz
Pulse: DD (45°-pulse+signal capturing time 1H decoupling)
Repetition time: 1200 sec to 3000 sec
Observation width: 100 kHz
Observation center: near -100 ppm
Signal capturing time: 0.05 sec
Number of scans: 560
Sample amount: 207.6 mg

<High-Frequency Induction Heating Furnace Burning - Infrared Absorption Method>

The content of carbon in the base particle or the composite particle, that is, the content rate of carbon in the base particle or the composite particle, can be measured by using a carbon/sulfur analyzer (for example, EMIA-520 model, manufactured by HORIBA, Ltd.). The sample is weighed on a magnetic board, a burning auxiliary is added, the sample is inserted into a burning furnace (carrier gas: oxygen) heated to 1350°C, and the amount of carbon dioxide gas generated during burning is detected by infrared absorption. A calibration curve is prepared using, for example, carbon steel (carbon content: 0.49%) manufactured by the Bureau of Analysed Samples Ltd., and the carbon content of the sample is calculated.

[Conductive Layer]

The conductive layer 31 coats at least a part of the surface of the base particle. The conductive layer 31 may coat the entire surface of the base particle. The conductive layer 31 is, for example, a thin film layer including a conductive material. When the negative electrode active material according to the present embodiment further includes the conductive layer 31 coating at least a part of the base particle, the conductivity of the negative electrode active material is improved.
The conductive material may be a conductive carbon material. That is, as described above, the conductive layer 31 may include carbon. As the carbon material, graphites such as natural graphite, artificial graphite, and graphitized mesophase carbon, amorphous carbon, soft carbon, hard carbon, and the like can be used. The carbon material may be amorphous carbon. According to the above, it is easy to form a thin conductive layer 31 coating the surface of the base particle. Examples of the amorphous carbon include carbon black, calcined pitch, cokes, and activated carbon.
The thickness of the conductive layer 31 is desirably small so as not to affect the average particle diameter of the composite particle 30, that is, small so as not to significantly increase the average particle diameter of the composite particle 30 with respect to the average particle diameter of the base particle. The thickness of the conductive layer 31 may be 1 nm or more and 200 nm or less, or 5 nm or more and 100 nm or less, in consideration of ensuring conductivity and the diffusibility of ions such as Li ions. The thickness of the conductive layer 31 can be measured by observing a cross-section of the negative electrode active material in which a cross-section of the composite particle 30 is exposed, with an SEM or a transmission electron microscope (TEM).

(Method for Producing Negative Electrode Active Material)

The negative electrode active material of the present disclosure includes, for example, producing base particles. The base particles are produced, for example, by a production method including the following first to fourth steps. Here, a method for producing the base particles 11 each shown in FIG. 1 will be described.
First step: a step of obtaining an alkali aluminate (hereinafter referred to as "raw material aluminate") that is a raw material.
Second step: a step of forming a composite of the raw material aluminate and a raw material silicon to obtain a composite intermediate in which the raw material silicon is dispersed in the raw material aluminate.
Third step: a step of performing heat treatment on the composite intermediate to obtain a sintered product including the alkali aluminate phase 12 and the silicon phase 13 dispersed in the alkali aluminate phase 12.
Fourth step: a step of crushing the sintered product to obtain the base particles 11.

[First Step]

The first step includes, for example, a step of mixing an aluminum compound, a compound containing the alkali metal element, and, if necessary, a compound containing the element M to obtain a mixture, and a step of calcining the mixture to obtain the raw material aluminate. The calcination is performed in an oxidative atmosphere, for example. The calcining temperature may be 400°C or higher and 1200°C or lower, or may be 700°C or higher and 1100°C or lower.

Examples of the aluminum compound include aluminum oxide, aluminum hydroxide, and aluminum carbonate. One of the aluminum compounds may be used alone, or two or more of the aluminum compounds may be used in combination.

Examples of the compound containing the alkali metal element include lithium carbonate, lithium oxide, lithium hydroxide, lithium hydride, sodium carbonate, sodium oxide, sodium hydroxide, sodium hydride, potassium carbonate, potassium oxide, potassium hydroxide, and potassium hydride. One of the compounds containing the alkali metal element may be used alone, or two or more of the compounds containing the alkali metal element may be used in combination.

The compound containing the element M is, for example, a boron compound. Examples of the boron compound include boron oxide, boric acid, borax, and sodium tetraborate. One of the boron compounds may be used alone, or two or more of the boron compounds may be used in combination.

In addition, as described above, the ratio (mMA/mAl) may be, for example, 0.04 or more and 0.50 or less, or 0.05 or more and 0.25 or less. As described above, the ratio (mMA) of the mass of the alkali metal element may be, for example, 1.0 mass% or more and 9.5 mass% or less. In this case, it becomes easy to set the total pore volume of pores having a diameter of 10 nm or more and 200 nm or less in each base particle 11 to 0.05 $cm^3$/g or less.

In the first step, the aluminum compound that has not reacted with the compound containing the alkali metal element in the step of preparing the raw material aluminate may remain in the raw material aluminate. If the amount of the used aluminum compound relative to the compound containing the alkali metal element is large, the aluminum compound tends to remain. When the aluminum compound remaining in the raw material aluminate is $Al_2O_3$, an $Al_2O_3$ phase dispersed in the alkali aluminate phase 12 may be formed in the finally obtained base particles.

[Second Step]

In the second step, for example, the mixture of the raw material aluminate and the raw material silicon is crushed while applying shearing force to the mixture to obtain the fined composite intermediate. An example includes a method of mixing the raw material aluminate and the raw material silicon at a predetermined mass ratio, and fining the mixture by using a crushing machine such as a ball mill.

The raw material silicon is, for example, coarse silicon particles having an average particle diameter of several micrometers to several tens of micrometers. The silicon particles may be prepared such that the crystallite size of the silicon phase 13 calculated by the Scherrer equation from the full width at half maximum of a diffraction peak derived from the Si(111) plane in the X-ray diffraction pattern of the negative electrode active material or the base particle is 15 nm or less. Alternatively, silicon nanoparticles and raw aluminate nanoparticles may be synthesized and mixed together without using a crushing device.

[Third Step]

In the third step, for example, the fined composite intermediate is calcined while applying pressure to the composite intermediate by a hot-press or the like to obtain a sintered product. The pressure applied to the composite intermediate is, for example, 100 MPa or more and may be 100 MPa or more and 300 MPa or less. The higher the pressure in the third step is, the smaller the total pore volume of the composite particles tends to be. The calcination of the composite intermediate is desirably performed in an inert atmosphere (for example, an atmosphere of argon, nitrogen, or the like). The calcination conditions in the third step also affect the crystallites of the silicon phase 13, and generally, the higher the calcining temperature is, the larger the crystallite size is.

An example of the calcining temperature is 450°C or higher and 1000°C or lower. If the calcining temperature is within this range, it is easy to form a structure in which a minute silicon phase 13 is dispersed in the alkali aluminate phase 12 having low crystallinity. The raw material aluminate is stable at this temperature and hardly reacts with silicon. The calcining temperature may be 550°C or higher and 950°C or lower, or 650°C or higher and 900°C or lower. In order to reduce the total pore volume of the pores having a diameter of 10 nm or more and 200 nm or less, it is desirable to perform calcination at a temperature of 650°C or higher. The calcining time is, for example, 1 hour or longer and 10 hours or shorter.

[Fourth Step]

The fourth step is a step of performing crushing such that the base particles 11 have the desired particle size distribution. For example, crushing is performed such that the median diameter of the base particles 11 is 1 $\mu$m or more and 25 $\mu$m or less.

The base particles 11 can be produced by the first to fourth steps described above.

In order to reduce the total pore volume of the pores having a diameter of 10 nm or more and 200 nm or less in the composite particles 10, for example, for the base particles 11 obtained in the fourth step, a step of filling the pores formed inside the base particles 11 with a filling material may be further performed. Examples of the filling material with which the pores are filled include carbon materials and resin materials. When filling the pores with, for example, a carbon material, the interiors of the pores of the base particles 11 can be filled with the carbon material by mixing the base particles 11 including the pores with an amount of the carbon material selected in consideration of the size and volume of the pores included in the base particles 11 and calcining the mixture. When performing this step, the base particles 21 each further including the carbon phase 22 can be produced.

When a conductive layer is to be formed on the surfaces of the base particles 11, the following fifth step is further performed.

Fifth step: a step of forming the conductive layer 31 on the surfaces of the base particles 11 each including the alkali aluminate phase 12 and the silicon phase 13.

The conductive material constituting the conductive layer 31 is desirably a conductive carbon material as described above. Examples of a method of coating the surfaces of the base particles with the carbon material include: a CVD method using a hydrocarbon gas such as acetylene and methane as a raw material; and a method of mixing coal pitch, petroleum pitch, phenol resin, or the like with the base particles and heating and carbonizing the mixture. Alternatively, carbon black may be adhered to the base particles.

In the fifth step, for example, a mixture of the base particles 11 and the carbon material is heated at 700°C or higher and 950°C or lower in an inert atmosphere (for example, an atmosphere of argon, nitrogen, or the like) to form the conductive layer 31 on the surfaces of the base particles. Thus, the composite particles 30 each having the conductive layer 31 on the surface of the base particle 11 are obtained.

When the carbon material constituting the carbon phase 22 and the carbon material as the conductive material constituting the conductive layer 31 are the same, the pores inside the base particles can be filled with the carbon material at the same time as the formation of the conductive layer 31, by adjusting the amount of the carbon material mixed with the base particles 11 in the fifth step and adjusting the heating conditions, for example. Therefore, in the fifth step, it is also possible to simultaneously form the conductive layer 31 and the carbon phase 22 in the base particles. Accordingly, it is also possible to adjust the above total pore volume in the fifth step.

(Battery)

A battery according to the present embodiment includes a negative electrode, a positive electrode, and an electrolyte. The negative electrode includes the negative electrode active material according to the present embodiment. Since the negative electrode includes the negative electrode active material according to the present embodiment, the battery according to the present embodiment has improved cycle characteristics and also has improved initial charge-discharge efficiency.

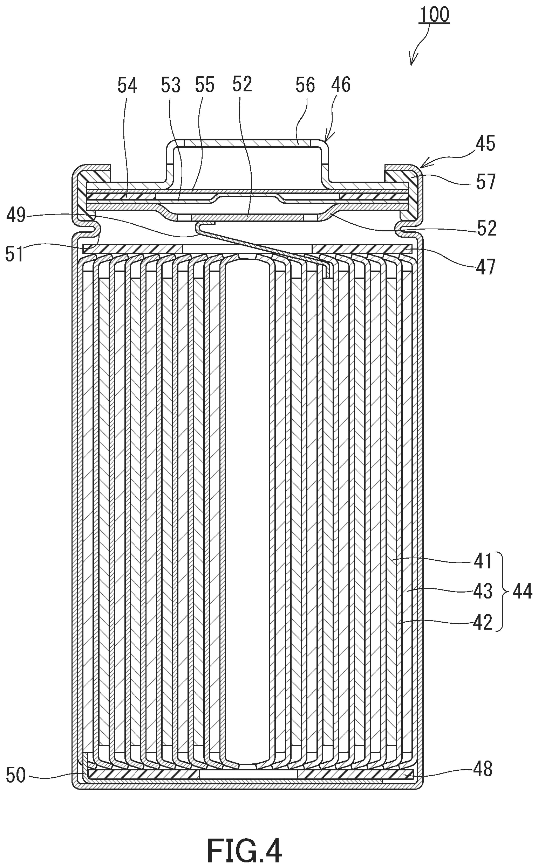

FIG. 4 is a vertical cross-sectional view schematically showing an example of the battery according to the present embodiment. A battery 100 is a cylindrical battery including a cylindrical battery case, a wound electrode group 44, and an electrolyte solution which is not shown. The electrode group 44 is housed in the battery case and is in contact with the electrolyte solution.

The battery case is composed of a case body 45 which is a cylindrical metal container with a bottom, and a sealing body 46 which seals the opening of the case body 45. A gasket 57 is placed between the case body 45 and the sealing body 46. The airtightness of the battery case is ensured by the gasket 57. In the case body 45, insulating plates 47 and 48 are respectively placed at both ends of the electrode group 44 in the direction of the winding axis of the electrode group 44.

The case body 45 has, for example, a step portion 51. The step portion 51 can be formed by partially pressing the side wall of the case body 45 from the outside. The step portion 51 may be formed on the side wall of the case body 45 in an annular shape along the circumferential direction of an imaginary circle defined by the case body 45. At this time, the sealing body 46 is supported by, for example, the surface of the step portion 51 on the opening side.

The sealing body 46 includes a filter 52, a lower valve body 53, an insulating member 54, an upper valve body 55, and a cap 56. In the sealing body 46, these members are stacked in this order. The sealing body 46 is attached to the opening of the case body 45 such that the cap 56 is located outside the case body 45 and the filter 52 is located inside the case body 45.

Each of the above members constituting the sealing body 46 has, for example, a disk shape or a ring shape. The above members, except for the insulating member 54, are electrically connected to each other.

The electrode group 44 has a positive electrode 41, a separator 42, and a negative electrode 43. The positive electrode 41, the separator 42, and the negative electrode 43 are all strip-shaped. The width direction of the strip-shaped positive electrode 41 and negative electrode 43 is, for example, parallel to the winding axis of the electrode group 44. The separator 42 is placed between the positive electrode 41 and the negative electrode 43. The positive electrode 41 and the negative electrode 43 are spirally wound with the separator 42 interposed between these electrodes.

When a cross-section of the battery 100 in a direction perpendicular to the winding axis of the electrode group 44 is observed, the positive electrode 41 and negative electrode 43 are stacked alternately in the radial direction of the imaginary circle defined by the case body 45, with the separator 42 interposed between these electrodes.

The positive electrode 41 is electrically connected via a positive electrode lead 49 to the cap 56 which also serves as a positive electrode terminal. One end of the positive electrode lead 49 is connected to, for example, the vicinity of the center of the positive electrode 41 in the longitudinal direction of the positive electrode 41. The positive electrode lead 49 extends from the positive electrode 41 to the filter 52 through a through hole formed in the insulating plate 47. The other end of the positive electrode lead 49 is welded to, for example, the surface of the filter 52 on the electrode group 44 side.

The negative electrode 43 is electrically connected via a negative electrode lead 50 to the case body 45 which also serves as a negative electrode terminal. One end of the negative electrode lead 50 is connected to, for example, an end portion of the negative electrode 43 in the longitudinal direction of the negative electrode 43. The other end of the negative electrode lead 50 is welded to, for example, the inner bottom surface of the case body 45.

Each component of the battery 100 will be specifically described below.

The positive electrode 41 includes a material that has the property of occluding and releasing metal ions (for example, lithium ions). The positive electrode 41 includes, for example, a positive electrode active material. The positive electrode 41 may include a positive electrode current collector and a positive electrode mixture layer supported on the surface of the positive electrode current collector.

The positive electrode mixture layer includes a positive electrode active material. Examples of the positive electrode active material include lithium-containing transition metal oxides, lithium-containing transition metal phosphates, transition metal fluorides, polyanionic materials, fluorinated polyanionic materials, transition metal sulfides, transition metal oxysulfides, and transition metal oxynitrides. In particular, when a lithium-containing transition metal oxide or a lithium-containing transition metal phosphate is used as the positive electrode active material, the production cost of the battery can be reduced and the average discharge voltage can be increased. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate. At least one selected from these positive electrode active materials can be used.

The positive electrode mixture layer may include a conductive additive, an ion conductor, and a binder, if necessary.

The conductive additive and the ion conductor are used to reduce the resistance of the electrode. Examples of the conductive additive include carbon materials and conductive polymer compounds. Examples of carbon materials include carbon black, graphite, acetylene black, carbon nanotubes, carbon nanofibers, graphene, fullerene, and graphite oxide. Examples of conductive polymer compounds include polyaniline, polypyrrole, and polythiophene. At least one selected from these conductive additives can be used.

The binder is used to improve the binding properties of the materials constituting the electrode. Examples of the binder include polymer materials such as polyvinylidene fluoride, vinylidene fluoride-hexafluoropropylene copolymer, vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The positive electrode current collector is, for example, a sheet or film made of a metal material such as aluminum, an aluminum alloy, stainless steel, titanium, or a titanium alloy. The sheet or film may be porous or non-porous. As the sheet or film, a metal foil, a metal mesh, or the like is used. A carbon material may be applied as a conductive auxiliary material to the surface of the positive electrode current collector.

The negative electrode 43 includes the negative electrode active material according to the present embodiment. The negative electrode 43 includes, for example, a negative electrode current collector and a negative electrode mixture layer supported on the surface of the negative electrode current collector.

The negative electrode current collector is, for example, a foil made of a metal material such as stainless steel, nickel, a nickel alloy, copper, or a copper alloy.

The negative electrode mixture layer includes the negative electrode active material according to the present embodiment. The negative electrode mixture layer may include other materials such as a conductive additive, an ion conductor, and a binder, if necessary. As the conductive additive, the ion conductor, and the binder, the materials described above for the positive electrode mixture layer can also be used for the negative electrode mixture layer.

The electrolyte solution may include a non-aqueous solvent and a lithium salt dissolved in the non-aqueous solvent. The concentration of the lithium salt in the electrolyte solution may be, for example, 0.5 mol/liter or more and 2 mol/liter or less. By controlling the lithium salt concentration within the above range, an electrolyte solution having excellent ionic conductivity and an appropriate viscosity can be obtained. However, the lithium salt concentration is not limited to the above.

As the non-aqueous solvent, cyclic carbonates, chain carbonates, cyclic ethers, chain ethers, nitriles, amides, etc., can be used. One solvent selected from these solvents may be used, or two or more of these solvents may be used in combination.

As the lithium salt, lithium hexafluorophosphate ($LiPF_6$), lithium tetrafluoroborate ($LiBF_4$), lithium perchlorate

(LiClO$_4$), lithium bis(fluorosulfonyl)imide (LiFSI), lithium bis(trifluoromethanesulfonyl)imide (LiTFSI), lithium bisperfluoroethylsulfonylimide (LiN(SO$_2$C$_2$F$_5$)$_2$), LiAsF$_6$, LiCF$_3$SO$_3$, lithium difluoro(oxalato)borate, etc., can be used. One selected from these electrolyte salts may be used, or two or more of these electrolyte salts may be used in combination.

Usually, it is desirable to interpose a separator between a positive electrode and a negative electrode. The separator 42 has a high ion permeability and has appropriate mechanical strength and insulating properties. As the separator 42, a microporous thin film, a woven fabric, a nonwoven fabric, or the like can be used. As the material of the separator 42, for example, a polymer can be used. The polymer may be a polyolefin such as polypropylene and polyethylene.

In the battery of the present disclosure, for example, a polymer provided as a separator may be impregnated with the electrolyte solution. That is, the battery of the present disclosure may have a structure in which an electrolyte solution and a polymer are used in combination.

The battery of the present disclosure may further include a solid electrolyte as the electrolyte. That is, the battery of the present disclosure may have a hybrid structure in which an electrolyte solution and a solid electrolyte are used in combination. Examples of solid electrolyte materials are halide solid electrolytes, sulfide solid electrolytes, oxide solid electrolytes, or organic polymer solid electrolytes. In the present disclosure, the term "halide solid electrolyte" refers to a solid electrolyte containing a halogen element as a main component of anions. The term "sulfide solid electrolyte" refers to a solid electrolyte containing sulfur as a main component of anions. The term "oxide solid electrolyte" refers to a solid electrolyte containing oxygen as a main component of anions. The main component of the anions means an anion with the largest amount of substance among all the anions constituting the solid electrolyte.

In the present disclosure, as an example of the structure of the battery according to the present embodiment, the configuration example shown in FIG. 3, that is, a cylindrical nonaqueous electrolyte secondary battery in which a wound electrode group formed by winding a positive electrode and a negative electrode with a separator interposed therebetween and an electrolyte solution are housed in an exterior body, is described. However, the battery according to the present disclosure is not limited to this configuration example. The battery according to the present disclosure may be in any form, such as a prismatic type, a coin type, a button type, or a stack type. Furthermore, as the electrode group in the secondary battery according to the present disclosure, an electrode group of another form, such as an electrode group in which a positive electrode and a negative electrode are stacked with a separator interposed therebetween, may be used instead of a wound electrode group.

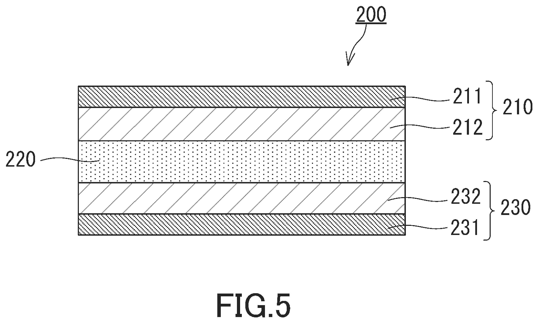

FIG. 5 is a cross-sectional view showing a schematic configuration of another example of the battery according to the present embodiment. A battery 200 includes a positive electrode 210, an electrolyte layer 220, and a negative electrode 230. The negative electrode 230 includes the negative electrode active material according to the present embodiment. The electrolyte layer 220 is placed between the positive electrode 210 and the negative electrode 230. The battery 200 is, for example, an all-solid-state battery.

The positive electrode 210 includes a positive electrode current collector 211 and a positive electrode mixture layer 212 supported on the surface of the positive electrode current collector 211. The positive electrode mixture layer 212 is located between the positive electrode current collector 211 and the electrolyte layer 220. The materials described above for the positive electrode 41 in the battery 100 can be used for the positive electrode current collector 211 and the positive electrode mixture layer 212.

The positive electrode mixture layer 212 may include a solid electrolyte. Examples of the solid electrolyte include the solid electrolytes described above as the electrolyte in the battery 100.

The electrolyte layer 220 is a layer including an electrolyte. The electrolyte is, for example, a solid electrolyte. The electrolyte layer 220 may be a solid electrolyte layer. Examples of the solid electrolyte include the solid electrolytes described above as the electrolyte in the battery 100.

The electrolyte layer 220 may further include a binder. As the binder, the materials described above for the positive electrode mixture layer of the battery 100 can also be used for the electrolyte layer 220.

The negative electrode 230 includes a negative electrode current collector 231 and a negative electrode mixture layer 232 supported by the negative electrode current collector 231. The negative electrode mixture layer 232 includes the negative electrode active material according to the present embodiment. The negative electrode mixture layer 232 is located between the negative electrode current collector 231 and the electrolyte layer 220. The materials described above for the negative electrode 43 in the battery 100 can be used for the negative electrode current collector 231 and the negative electrode mixture layer 232.

The negative electrode mixture layer 232 may include a solid electrolyte. Examples of the solid electrolyte include the solid electrolytes described above as the electrolyte in the battery 100.

The battery 200 can be configured as a battery of various shapes, such as a coin type, a cylindrical type, a prismatic type, a sheet type, a button type, a flat type, or a stack type.

(Other Embodiments)

(Additional Notes)

The following techniques are disclosed by the description of the above embodiment.

(Technique 1)

A negative electrode active material including composite particles each including a base particle, wherein

the base particle includes

an alkali aluminate phase including at least one alkali metal element and Al, and
a silicon phase dispersed in the alkali aluminate phase, and

a total pore volume of pores having a diameter of 10 nm or more and 200 nm or less in the composite particles, as calculated by a BJH method, is 0.05 $cm^3$/g or less.

Owing to this configuration, the negative electrode active material according to Technique 1 can improve durability against charge and discharge, and, as a result, can improve the cycle characteristics of a battery.

(Technique 2)

The negative electrode active material according to Technique 1, wherein the total pore volume is 0.04 $cm^3$/g or less.
Owing to this configuration, the negative electrode active material according to Technique 2 can further improve durability against charge and discharge, and, as a result, can further improve the cycle characteristics of the battery.

(Technique 3)

The negative electrode active material according to Technique 1 or 2, wherein the base particle further includes a carbon phase dispersed in the alkali aluminate phase.
Owing to this configuration, the negative electrode active material according to Technique 3 can further improve durability against charge and discharge, and, as a result, can further improve the cycle characteristics of the battery.

(Technique 4)

The negative electrode active material according to any one of Techniques 1 to 3, wherein the composite particles each further include a conductive layer coating at least a part of a surface of the base particle.
Owing to this configuration, the conductivity of the negative electrode active material is improved, so that the characteristics of the battery can be improved.

(Technique 5)

The negative electrode active material according to any one of Techniques 1 to 4, wherein

the composite particles each further include carbon, and
a content rate of the carbon in the composite particle is 2 mass% or more and 15 mass% or less.

Owing to this configuration, the negative electrode active material according to Technique 5 can further improve durability against charge and discharge, and, as a result, can further improve the cycle characteristics of the battery.

(Technique 6)

The negative electrode active material according to Technique 5, wherein the content rate of the carbon in the composite particle is 3.5 mass% or more and 12 mass% or less.
Owing to this configuration, the negative electrode active material according to Technique 6 can even further improve durability against charge and discharge, and, as a result, can even further improve the cycle characteristics of the battery.

(Technique 7)

The negative electrode active material according to any one of Techniques 1 to 6, wherein the alkali aluminate phase further includes B.

Owing to this configuration, the pores included in the base particle are reduced, and thus the cycle characteristics of the battery can be further improved.

(Technique 8)

The negative electrode active material according to Technique 7, wherein a ratio (mAl/mB) of a ratio (mAl) of a mass of the Al element to a total mass of elements excluding oxygen element and carbon element, to a ratio (mB) of a mass of the B element to said total mass, in the base particle is 1.0 or more and 30.0 or less.

Owing to this configuration, the effect of reducing pores in the base particle by B can become more remarkable. Accordingly, deterioration of a particle structure caused by the pores in the base particle is suppressed, and thus the cycle characteristics of the battery can be effectively improved.

(Technique 9)

The negative electrode active material according to any one of Techniques 1 to 8, wherein the alkali metal element includes at least one selected from the group consisting of Li, Na, and K.

Owing to this configuration, the negative electrode active material according to Technique 9 can further improve the cycle characteristics of the battery.

(Technique 10)

A battery including:

a negative electrode including the negative electrode active material according to any one of Techniques 1 to 9;
a positive electrode; and
an electrolyte.

With this configuration, a battery having improved cycle characteristics is obtained.

EXAMPLES

Hereinafter, the present disclosure will be described in more detail using examples. The following examples are each merely one embodiment, and the present disclosure is not limited thereto.

<Example 1>

[Preparation of Base Particles]

(First Step)

$Al_2O_3$, $Li_2CO_3$, and $B_2O_3$ were mixed, and this mixture was calcined in air at 750°C for 10 hours to obtain a raw material aluminate. In the first step, the mixing ratio of $Al_2O_3$, $Li_2CO_3$, and $B_2O_3$ was adjusted such that each constituent element of a lithium aluminate phase, which was an alkali aluminate phase, had an element ratio shown in Table 1. The raw material aluminate was crushed such that the average particle diameter thereof was 10 $\mu$m.

(Second Step)

Raw material silicon (3N, average particle diameter: 10 $\mu$m) and the raw material aluminate (average particle diameter: 10 $\mu$m) obtained in the first step were mixed. In the second step, the mixing ratio of the raw material silicon and the raw material aluminate was adjusted such that each element to constitute base particles had an element ratio shown in Table 1. The mixture was charged into a pot (made of SUS, capacity: 500 mL) of a planetary ball mill (P-5, manufactured by Fritsch GmbH), 24 balls (diameter: 20 mm) made of SUS were placed in the pot, the pot was closed with a lid, and the mixture was crushed at 200 rpm for 50 hours in an inert atmosphere.

(Third Step)

The powdery mixture obtained in the second step was taken out in an inert atmosphere, and calcined in the inert atmosphere by using a hot-pressing machine while applying a pressure of 200 MPa at 700°C for 4 hours to obtain a sintered product of the mixture.

(Fourth Step)

The sintered product obtained in the third step was crushed, and passed through a 40-$\mu$m mesh to obtain base particles in which a silicon phase was dispersed in a lithium aluminate phase, which was an alkali aluminate phase.

(Fifth Step)

Coal pitch (MCP250, manufactured by JFE Chemical Corporation) and the base particles obtained in the fourth step were mixed. This mixture was calcined in an inert atmosphere at 800°C for 5 hours to form a conductive layer including a conductive carbon material on the surfaces of the base particles. In Example 1, coal pitch was also used as a filling material for the pores formed in the base particles obtained in the fourth step. That is, in the fifth step, the amount of coal pitch to be added was adjusted in consideration of the formation of the conductive layer and the carbon phase in the base particles. The amount of coal pitch added was 10 mass% with respect to the total mass of the base particles and coal pitch. Thereafter, a sieve was used to obtain composite particles having the conductive layer and an average particle diameter of 5 $\mu$m.

For the base particles, the content rates of Li, Al, B, and Si with respect to the total mass of the elements excluding oxygen element and carbon element were determined from the charge ratio of the raw materials. When the content rate of each element in the obtained base particles was measured using ICP and Si-NMR, the results were almost the same as the content rate of each element determined from the charge ratio. Table 1 shows the content rate of each element determined from the charge ratio. The content rate of carbon (carbon amount) in the composite particles and the total pore volume of pores having a diameter of 10 nm or more and 200 nm or less in the composite particles were also obtained, and the measurement results are shown in Table 1. The content rate of carbon in the composite particles was measured using a carbon/sulfur analyzer (Model EMIA-520 manufactured by Horiba, Ltd.) by the method exemplified above. The total pore volume of the pores having a diameter of 10 nm or more and 200 nm or less in the composite particles was measured by the BJH method using a BELSORP MINI X (manufactured by MicrotracBEL Corp.).

[Production of Negative Electrode]

The base particles whose surfaces were coated with a conductive layer and graphite were mixed at a mass ratio of 5:95 to obtain a mixture. The mixture was used as a negative electrode active material. The negative electrode active material, a Na salt of carboxymethyl cellulose (CMC), and styrene butadiene rubber (SBR) were mixed at a mass ratio of negative electrode active material : Na salt of CMC : SBR = 97.5:1:1.5, and water was added to the negative electrode mixture, followed by stirring to prepare a negative electrode slurry. Next, the negative electrode slurry was applied to both sides of a copper foil which was a negative electrode current collector, and the coating film was dried and then rolled to produce a negative electrode in which a negative electrode mixture layer having a density of 1.5 g/cm$^3$ was formed on both sides of the copper foil.

[Production of Positive Electrode]

A positive electrode active material, acetylene black, and PVDF were mixed at a mass ratio of positive electrode active material : acetylene black : PVDF = 95:2.5:2.5, and an appropriate amount of N-methyl-2-pyrrolidone (NMP) was added to the positive electrode mixture, followed by stirring to prepare a positive electrode slurry. The positive electrode active material used was lithium cobalt oxide. Next, the positive electrode slurry was applied to both sides of an aluminum foil which was a positive electrode current collector, and the coating film was dried and then rolled to produce a positive electrode in which a positive electrode mixture layer having a density of 3.6 g/cm$^3$ was formed on both sides of the aluminum foil.

[Preparation of Non-Aqueous Electrolyte]

A non-aqueous electrolyte was prepared by dissolving lithium hexafluorophosphate ($LiPF_6$) at a concentration of 1.0 mol/L in a mixed solvent in which ethylene carbonate (EC) and diethyl carbonate (DEC) were mixed at a volume ratio (25°C) of EC:DEC = 3:7.

[Production of Non-Aqueous Electrolyte Secondary Battery]

The positive electrode and the negative electrode to which a lead was attached were wound via a separator to produce a wound electrode assembly. The electrode assembly was inserted into an exterior body made of an aluminum laminate film, dried in vacuo at 105°C for 2 hours, then the non-aqueous electrolyte was injected, and an opening of the exterior body was sealed to obtain a non-aqueous electrolyte secondary battery.

<Example 2>

In the preparation of the base particles, the amount of coal pitch added in the fifth step was changed to 20 mass% with respect to the total mass of the base particles and coal pitch. Other than this, base particles were prepared in the same manner as in Example 1, and a non-aqueous electrolyte secondary battery was produced.

<Example 3>

In the preparation of the base particles, the calcining temperature was changed to 800°C in the third step, and the amount of coal pitch added in the fifth step was changed to 5 mass% with respect to the total mass of the base particles and coal pitch. Other than these, base particles were prepared in the same manner as in Example 1, and a non-aqueous electrolyte secondary battery was produced.

<Example 4>

In the preparation of the base particles, the calcining temperature was changed to 800°C in the third step. Other than this, base particles were prepared in the same manner as in Example 1, and a non-aqueous electrolyte secondary battery was produced.

<Example 5>

In the preparation of the base particles, the calcining temperature was changed to 800°C in the third step, and the amount of coal pitch added in the fifth step was changed to 20 mass% with respect to the total mass of the base particles and coal pitch. Other than these, base particles were prepared in the same manner as in Example 1, and a non-aqueous electrolyte secondary battery was produced.

<Example 6>

In the preparation of the base particles, the calcining temperature was changed to 800°C in the third step, and the amount of coal pitch added in the fifth step was changed to 2 mass% with respect to the total mass of the base particles and coal pitch. Other than these, base particles were prepared in the same manner as in Example 1, and a non-aqueous electrolyte secondary battery was produced.

<Comparative Example 1>

In the preparation of the base particles, the amount of coal pitch added in the fifth step was changed to 2 mass% with respect to the total mass of the base particles and coal pitch. Other than this, base particles were prepared in the same manner as in Example 1, and a non-aqueous electrolyte secondary battery was produced.

<Comparative Example 2>

In the preparation of the base particles, the amount of coal pitch added in the fifth step was changed to 5 mass% with respect to the total mass of the base particles and coal pitch. Other than this, base particles were prepared in the same manner as in Example 1, and a non-aqueous electrolyte secondary battery was produced.

The battery of each of Examples and Comparative Examples was evaluated for capacity retention as an evaluation of cycle characteristics by the following method. The evaluation results are shown in Table 1.

[Capacity Retention (Evaluation of Cycle Characteristics)]

Each of the evaluation target batteries was charged and discharged as follows with 200 cycles, and the capacity retention was calculated with the following formula.

Capacity retention (%) = (Discharge capacity at 200th cycle/Discharge capacity at 1st cycle)×100

<Charge>

The evaluation target battery was charged at 25°C at a constant current of 1 It (800 mA) until a voltage reached 4.2 V, and then charged at a constant voltage of 4.2 V until a current reached 1/20 It (40 mA).

<Discharge>

After rest for 10 minutes, the battery was discharged at 25°C at a constant current of 1 It (800 mA) until the voltage reached 2.75 V.

[Table 1]

| | Element ratio in base particles (excluding O and C) [mass%] | | | | mAl/mB | Calcining temperature [°C] | Content rate of carbon [mass%] | Total pore volume (10-200 nm) [cm³/g] | Cycle characteristics (200 cyc) [%] |
|---|---|---|---|---|---|---|---|---|---|
| | Li | Al | B | Si | | | | | |
| Ex. 1 | 2.4 | 17.5 | 4.0 | 76.2 | 4.4 | 700 | 6.5 | 0.036 | 89 |
| Ex. 2 | 2.4 | 17.5 | 4.0 | 76.2 | 4.4 | 700 | 10.0 | 0.023 | 90 |
| Ex. 3 | 2.4 | 17.5 | 4.0 | 76.2 | 4.4 | 800 | 3.9 | 0.023 | 88 |
| Ex. 4 | 2.4 | 17.5 | 4.0 | 76.2 | 4.4 | 800 | 5.5 | 0.016 | 89 |
| Ex. 5 | 2.4 | 17.5 | 4.0 | 76.2 | 4.4 | 800 | 8.9 | 0.006 | 90 |
| Ex. 6 | 2.4 | 17.5 | 4.0 | 76.2 | 4.4 | 800 | 1.5 | 0.038 | 85 |
| Comp. Ex. 1 | 2.4 | 17.5 | 4.0 | 76.2 | 4.4 | 700 | 1.5 | 0.067 | 83 |
| Comp. Ex. 2 | 2.4 | 17.5 | 4.0 | 76.2 | 4.4 | 700 | 4.1 | 0.052 | 83 |

(Discussion)

As shown in Table 1, the batteries of Examples 1 to 6, for which the composite particles in which the total pore volume of the pores having a diameter of 10 nm or more and 200 nm or less was 0.05 cm³/g or less were used as the negative electrode active material, had a higher capacity retention at 200 cycles than the batteries of Comparative Examples 1 and 2 in which the total pore volume exceeded 0.05 cm³/g. That is, the negative electrode active materials of Examples 1 to 6 were able to improve the cycle characteristics of the battery.

Among the batteries of Examples 1 to 6 for which the composite particles in which the total pore volume was 0.05 cm³/g or less were used as the negative electrode active material, the batteries of Examples 1 to 5 in which the content rate of carbon in the composite particles was in the range of 2 mass% or more and 15 mass% or less exhibited more improved cycle characteristics than the battery of Example 6 in which the content rate of carbon was less than 2 mass%. Therefore, it was confirmed that a negative electrode active material including composite particles in which the total pore volume is 0.05 cm³/g or less and the content rate of carbon is 2 mass% or more and 15 mass% or less can further improve the cycle characteristics of a battery.

INDUSTRIAL APPLICABILITY

The technology of the present disclosure is useful for batteries such as lithium-ion secondary batteries.

**Claims**

**1.** A negative electrode active material comprising composite particles each including a base particle, wherein

**19**

the base particle includes

an alkali aluminate phase including at least one alkali metal element and Al, and
a silicon phase dispersed in the alkali aluminate phase, and

a total pore volume of pores having a diameter of 10 nm or more and 200 nm or less in the composite particles, as calculated by a BJH method, is 0.05 cm$^3$/g or less.

2. The negative electrode active material according to claim 1, wherein the total pore volume is 0.04 cm$^3$/g or less.

3. The negative electrode active material according to claim 1, wherein the base particle further includes a carbon phase dispersed in the alkali aluminate phase.

4. The negative electrode active material according to claim 1, wherein the composite particles each further include a conductive layer coating at least a part of a surface of the base particle.

5. The negative electrode active material according to claim 1, wherein

the composite particles each further include carbon, and
a content rate of the carbon in the composite particle is 2 mass% or more and 15 mass% or less.

6. The negative electrode active material according to claim 5, wherein the content rate of the carbon in the composite particle is 3.5 mass% or more and 12 mass% or less.

7. The negative electrode active material according to claim 1, wherein the alkali aluminate phase further includes B.

8. The negative electrode active material according to claim 7, wherein

when a ratio of a mass of the Al element to a total mass of elements excluding oxygen element and carbon element in the base particle is mAl, and
a ratio of a mass of the B element to the total mass of the elements excluding oxygen element and carbon element in the base particle is mB,
a ratio (mAl/mB) is 1.0 or more and 30.0 or less.

9. The negative electrode active material according to claim 1, wherein the alkali metal element includes at least one selected from the group consisting of Li, Na, and K.

10. A battery comprising:

a negative electrode including the negative electrode active material according to any one of claims 1 to 9;
a positive electrode; and
an electrolyte.

FIG.1

FIG.2

FIG.3

FIG.4

FIG.5

## INTERNATIONAL SEARCH REPORT

| International application No. |
| --- |
| **PCT/JP2024/026717** |

| A. | CLASSIFICATION OF SUBJECT MATTER |
| --- | --- |

*H01M 4/38*(2006.01)i; *H01M 4/36*(2006.01)i; *H01M 4/58*(2010.01)i
FI:  H01M4/38 Z; H01M4/36 A; H01M4/36 C; H01M4/58

According to International Patent Classification (IPC) or to both national classification and IPC

| B. | FIELDS SEARCHED |
| --- | --- |

Minimum documentation searched (classification system followed by classification symbols)

H01M4/38; H01M4/36; H01M4/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/113500 A1 (PANASONIC INTELLECTUAL PROPERTY MANAGEMENT CO., LTD.) 02 June 2022 (2022-06-02) <br> claim 1 | 1-10 |
| A | WO 2016/121321 A1 (SANYO ELECTRIC CO., LTD.) 04 August 2016 (2016-08-04) <br> claims 1-2, paragraphs [0030]-[0031] | 1-10 |
| A | CN 116404131 A (CHANGSHA RESEARCH INSTITUTE OF MINING AND METALLURGY CO., LTD.) 07 July 2023 (2023-07-07) <br> claims 1-10, paragraphs [0024]-[0026] | 1-10 |
| A | WO 2017/199606 A1 (JFE CHEMICAL CORP.) 23 November 2017 (2017-11-23) <br> claims 1-4, [paragraph] 0014 | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 September 2024** | **15 October 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
**Information on patent family members**

| International application No. |
| --- |
| **PCT/JP2024/026717** |

| Patent document cited in search report | | | Publication date (day/month/year) | Patent family member(s) | | | Publication date (day/month/year) |
| --- | --- | --- | --- | --- | --- | --- | --- |
| WO | 2022/113500 | A1 | 02 June 2022 | US | 2024/0021806 | A1 | |
| | | | | claim 1 | | | |
| | | | | EP | 4254551 | A1 | |
| | | | | CN | 116636036 | A | |
| WO | 2016/121321 | A1 | 04 August 2016 | US | 2017/0331108 | A1 | |
| | | | | claims 1-2, paragraphs [0039]-[0040] | | | |
| | | | | CN | 107112534 | A | |
| CN | 116404131 | A | 07 July 2023 | (Family: none) | | | |
| WO | 2017/199606 | A1 | 23 November 2017 | TW | 201742298 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022113500 A1